(19) Europäisches Patentamt / European Patent Office / Office européen des brevets

(11) **EP 1 976 738 B1**

(12) **FASCICULE DE BREVET EUROPEEN**

(45) Date de publication et mention de la délivrance du brevet:
**17.08.2016 Bulletin 2016/33**

(21) Numéro de dépôt: **07703706.7**

(22) Date de dépôt: **08.01.2007**

(51) Int Cl.:
*B60T 7/04* *(2006.01)*     *B60T 8/40* *(2006.01)*
*B60T 11/20* *(2006.01)*     *B60T 13/10* *(2006.01)*

(86) Numéro de dépôt international:
**PCT/EP2007/050155**

(87) Numéro de publication internationale:
**WO 2007/080158 (19.07.2007 Gazette 2007/29)**

(54) **SYSTEME DE COMMANDE DE FREINAGE COMPORTANT UN SIMULATEUR DE COMMANDE EN PRESSION**

BREMSBETÄTIGUNGSVORRICHTUNG MIT SIMULATOR

BRAKING CONTROL SYSTEM COMPRISING A PRESSURE-CONTROL SIMULATOR

(84) Etats contractants désignés:
**AT BE BG CH CY CZ DE DK EE ES FI FR GB GR HU IE IS IT LI LT LU LV MC NL PL PT RO SE SI SK TR**

(30) Priorité: **10.01.2006 FR 0600210**
**10.01.2006 FR 0600211**

(43) Date de publication de la demande:
**08.10.2008 Bulletin 2008/41**

(73) Titulaire: **ROBERT BOSCH GMBH**
**70442 Stuttgart (DE)**

(72) Inventeurs:
• **ANDERSON, Chris**
**F-75002 Paris (FR)**
• **SPROCQ, Raynald**
**F-77450 Esbly (FR)**

(56) Documents cités:
**WO-A-2004/005095**     **DE-A1- 19 750 977**
**DE-A1-102004 005 107**

**Description**

L'invention concerne un système de commande de frein pour véhicules automobiles et notamment un système de commande hydraulique. L'invention est également applicable à des systèmes de freinage mixtes tels que prévus dans les véhicules hybrides (véhicules à traction électrique et à traction par moteur à combustion interne) comprenant un système de freinage à actionnement hydraulique et un système à freinage électrique utilisant le ou les moteurs de traction électriques en générateurs électriques.

**ETAT DE LA TECHNIQUE**

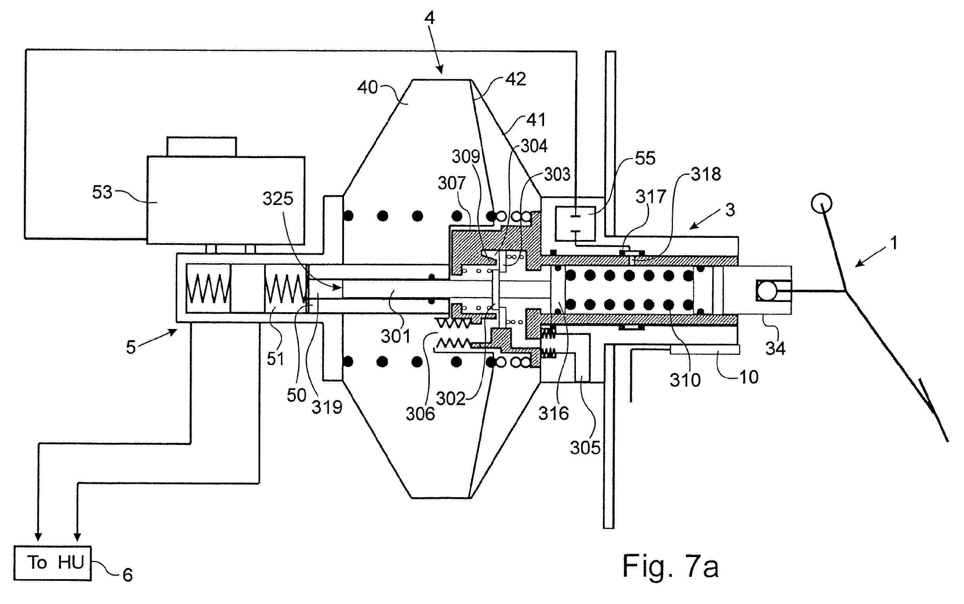

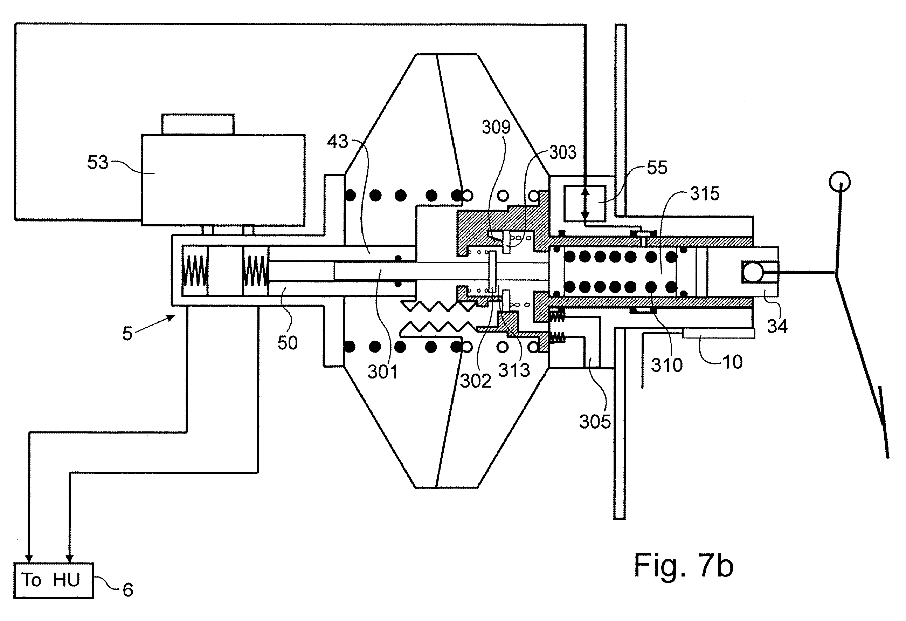

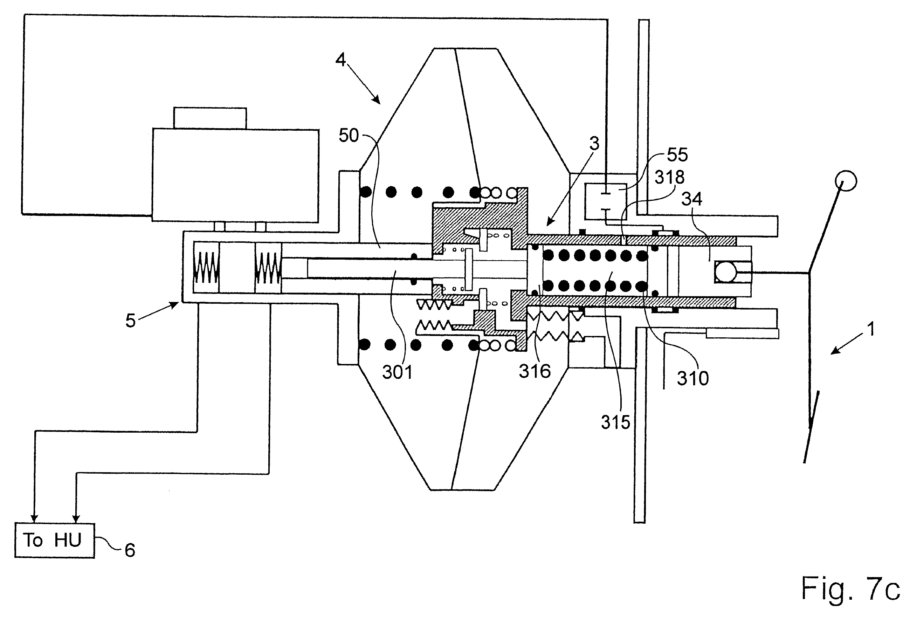

Le document WO 2004/005095 décrit un système de commande de frein pour véhicule automobile comportant une pédale de frein (1), un servomoteur d'assistance au freinage (Fig. 7: 55, page 25, 4ème paragraphe) lequel comprend une chambre avant et une chambre arrière séparées par un piston de servomoteur, ledit servomoteur permettant de fournir une commande de freinage amplifiée en fonction de la différence de pressions existant entre les deux dites chambres, un maître cylindre (11) de frein recevant les commandes de freinage amplifiées du servomoteur d'assistance au freinage, comportant un simulateur (2, 3, page 18, 3ème paragraphe) non couplé mécaniquement au piston du servomoteur d'assistance au freinage ledit simulateur recevant au moins une commande de freinage de la pédale de frein et permettant d'établir ou de contrôler, en échange, une différence de pressions entre la chambre avant et la chambre arrière du servomoteur d'assistance au freinage de façon a commander le déplacement du piston du servomoteur (cf. par exemple p. 18, 4ème paragraphe), le servomoteur d'assistance au freinage ne comportant pas de piston équipé d'une vanne trois voies solidaire du piston du servomoteur (cf. Fig. 7).
Dans les techniques connues de systèmes de freinages hydrauliques de véhicules automobiles, un servomoteur d'assistance au freinage comporte essentiellement une enceinte comprenant deux chambres (la chambre avant ou chambre à vide et la chambre arrière ou chambre de travail) séparées par une membrane mobile solidaire d'un piston. Une tige de commande peut se déplacer vers l'avant du véhicule lorsque le conducteur du véhicule actionne la pédale de frein. Ce déplacement de la tige de commande est transmis à un plongeur qui actionne des moyens d'assistance et le piston du servomoteur. Généralement, ces moyens d'assistance comprennent une vanne trois voies dont l'actionnement permet d'interrompre la communication entre la chambre à vide et la chambre de travail du servomoteur et de mettre cette dernière chambre à l'atmosphère ambiante. Etant donné que la chambre à vide est normalement sous vide, et en raison de la différence de pressions entre les deux chambres, une force d'assistance est exercée sur le piston qui sépare les deux chambres. Le piston se déplace alors vers l'avant agissant sur une tige de poussée servant à actionner le maître-cylindre du circuit de freinage.
La tige de commande qui est actionnée par la pédale de frein est en contact avec le piston du servomoteur, lequel est en contact avec la tige de poussée qui agit sur le piston du maître cylindre. Les différents éléments qui couplent la pédale de frein au piston du maître cylindre sont donc en contact les uns avec les autres. Le conducteur perçoit donc les réactions du circuit de freinage par l'intermédiaire de la pédale de frein.
Cependant, si un dispositif du véhicule déplace du fluide de freinage d'un point quelconque du circuit de freinage vers le maître cylindre, on aura une réaction au niveau de la pédale de frein et cette réaction sera ressentie par le conducteur. Par exemple, lors d'un freinage ayant pour effet de bloquer les roues du véhicule, le système d'antiblocage des roues (ABS) a pour fonction de réduire le freinage et pour cela d'extraire du fluide de freinage des freins de roues pour l'injecter dans le maître cylindre. Ou bien, dans les systèmes de contrôle dynamiques de trajectoire (ESP), un groupe hydraulique est capable d'agir sur un ou plusieurs circuits de freinage indépendamment de la commande des freins et cette action est également ressentie au niveau de la pédale de frein et si le conducteur freine au moment de ce fonctionnement de l'ESP, il ressentira une variation de la sensation du freinage qui ne correspondra pas forcément à la sensation de freinage qu'il perçoit habituellement.
Il convient également de signaler que l'injection de fluide de freinage dans le circuit de freinage par le groupe hydraulique ayant pour effet le recul des pistons du maître cylindre, cela a aussi pour effet de provoquer un recul de la pédale de frein. Si cela se produit au moment où le conducteur exerce un effort de freinage relativement important, le recul de la pédale de frein est absorbé par la cheville du conducteur ce qui peut être pour le moins désagréable pour le conducteur. De plus, un recul des pistons du maître-cylindre peut même être à l'origine de dommages corporels (cassure de la cheville du conducteur par exemple) lors d'un accident, notamment frontal, se produisant tandis que le conducteur exerce une forte pression sur la pédale de frein.
On peut donc avoir intérêt à amortir, voire à supprimer ou à absorber la retransmission de tous ces effets qui sont induits dans les circuits de freinage et/ou dans le maître cylindre vers la pédale de frein.
Une solution pour résoudre ces inconvénients est de prévoir une commande électrique du système de commande et de prévoir un système qui applique à la pédale de frein des ordres mécaniques qui simulent des sensations de freinage que le conducteur ressent habituellement avec un système de freinage classique dans les mêmes conditions de freinage. Dans la suite de la description, on appellera ce dispositif "simulateur de sensation de freinage". Dans un tel système, les dispositifs de freinage réels sont donc déconnectés du simulateur de sensation de freinage qui en retour du freinage applique des effets à la pédale de frein.

Cependant, de tels systèmes sont coûteux par rapport aux systèmes de freinage hydrauliques classiques. L'introduction de commandes électriques et de connectiques pose généralement des problèmes de fiabilité. Ces systèmes sont donc d'autant plus coûteux si on leur impose les mêmes exigences de fiabilité et de sécurité qu'aux systèmes hydrauliques classiques.

Par ailleurs les véhicules dits hybrides qui possèdent à la fois au moins un moteur de traction électrique alimenté par des batteries pour la propulsion du véhicule et un moteur à combustion interne (à essence, gaz oil, gaz, ou tout autre carburant) sont équipés généralement de freins électriques dans lesquels le freinage est obtenu par freinage inductif et récupération d'énergie à partir du moteur de traction électrique du véhicule. Le moteur électrique de traction fonctionne alors en générateur électrique, l'énergie électrique récupérée étant utilisée pour recharger les batteries ce qui est intéressant pour l'utilisation du véhicule.

Dans ces systèmes, il est également possible de faire varier le couple de freinage électrique. Lors d'un freinage, on n'applique pas alors toujours le maximum du frein électrique. Cela peut être par exemple le cas avec l'utilisation d'un radar donnant des informations sur l'état de la route, ou lors d'une manoeuvre plus ou moins rapide de la pédale de frein (par exemple un appui important suivi d'un relâchement de la pédale de frein).

On peut également prévoir d'envoyer un courant inverse dans le moteur électrique soit pour des questions de sécurité, soit pour des questions de sensation à la pédale de frein.

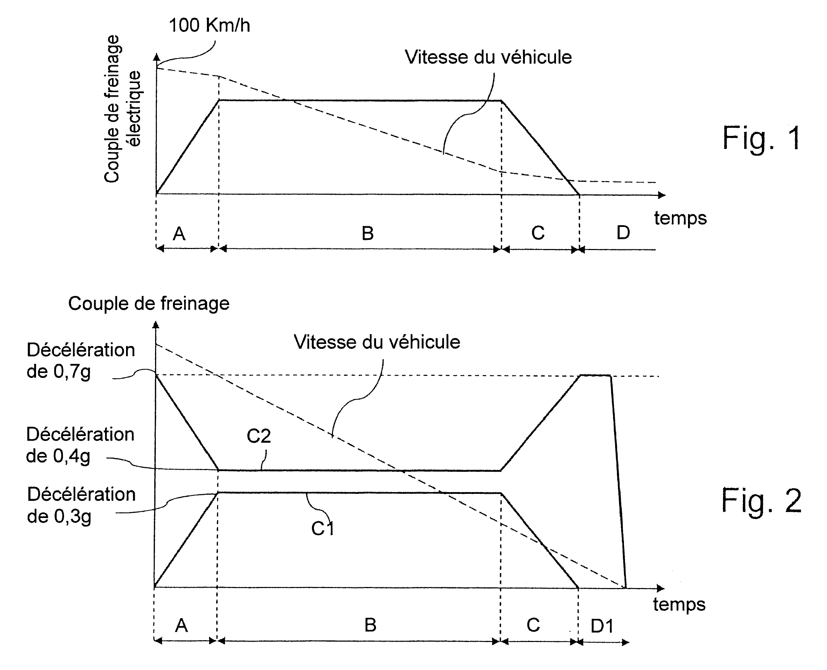

Cependant, le freinage électrique ne donne pas entièrement satisfaction. La figure 1 représente de manière schématique, en trait continu, une courbe de freinage (couple de freinage en fonction du temps) d'un tel système de freinage électrique seul. Sur ce même graphique, on a représenté en pointillés la vitesse du véhicule. Dans une première zone de freinage A, le freinage augmente progressivement jusqu'à atteindre sa pleine efficacité dans une deuxième zone de freinage B, puis lorsque la vitesse du véhicule devient faible, dans une troisième zone C, le couple de freinage diminue, et devient quasi inexistant dans une quatrième zone D. Un tel système de freinage est imparfait parce que dans la zone A le freinage ne devient pas pleinement efficace rapidement et parce que dans les zones C et D le freinage diminue lorsque le véhicule est à faible vitesse. Ce fonctionnement est représenté, sur la figure 1, par la courbe en pointillés.

Pour remédier à cet inconvénient du freinage électrique par récupération d'énergie, on doit prévoir qu'un système de freinage hydraulique vienne apporter un complément de freinage dans les zones A, C et D.

La figure 2 représente des courbes de fonctionnement du système de freinage électrique et du système de freinage hydraulique.

La courbe C1 est la courbe de freinage électrique par récupération d'énergie qui correspond à celle de la figure 1. Si l'on désire obtenir une décélération du véhicule de 0,7g par exemple, et que le système de freinage électrique permet d'obtenir une décélération maximale de 0,3g, il faudra que la courbe du freinage appliquée par le système de freinage hydraulique soit schématiquement celle représentée par la courbe C2. Dans la zone A, le couple de freinage hydraulique permettra dès que possible une décélération de 0,7g puis diminuera jusqu'à ce que le couple de freinage électrique atteigne sa valeur maximale et que la décélération équivalente due à ce couple de freinage électrique soit de 0,3g. De cette façon, à chaque instant, la somme des couples fournis par les systèmes de freinage électrique et hydraulique fournit une décélération de 0,7g. Dans la zone B, le système de freinage hydraulique complète le système de freinage électrique pour obtenir également une décélération de 0,7g. Ensuite, dans la zone C, on a une augmentation du couple de freinage du système hydraulique pour apporter à nouveau un complément de freinage au système de freinage électrique et pour, dans la zone D1, pallier la quasi inexistence de couple de freinage électrique.

Par ailleurs, outre les temps de réponse du système de freinage électrique par récupération, ce système peut ne pas répondre tout le temps de la même façon en raison de la charge du circuit de récupération d'énergie qui peut varier. C'est le cas notamment dans le cas où le circuit de récupération comporte essentiellement les batteries du véhicule. Dans ce cas la charge peut varier en fonction de l'état des batteries.

Dans de tels systèmes un circuit de commande, un calculateur par exemple, doit gérer les fonctionnements des systèmes de freinage. Ce calculateur est sollicité à chaque freinage. Il s'avère que les systèmes à commandes électriques sont vulnérables tandis que les systèmes à commandes hydrauliques par servomoteurs d'assistance au freinage ont fait leur preuve et demeurent moins coûteux que les systèmes à commandes électriques.

L'invention concerne donc un système de freinage qui permet de résoudre ces problèmes et avantageusement un système de freinage dont l'actionnement des dispositifs de freinage des roues du véhicule est hydraulique. De plus, ce système permet de découpler la pédale de frein des effets provoqués sur les circuits de freinage du véhicule par les différents systèmes du véhicule tel que l'antiblocage des roues (ABS) ou le système de contrôle dynamique de trajectoire (ESP), mais qui restitue vers la pédale de frein des effets qui simulent des sensations de freinage.

**EP 1 976 738 B1**

## RESUME DE L'INVENTION

L'invention concerne donc un système de commande de frein comportant:

- une pédale de frein,
- un servomoteur d'assistance au freinage lequel comprend une chambre avant et une chambre arrière séparées par un piston, ledit servomoteur permettant de fournir une commande de freinage amplifiée qui est fonction de la différence de pressions existant entre les deux dites chambres,
- un maître cylindre de frein recevant les commandes de freinage amplifiées du servomoteur d'assistance au freinage.

Selon l'invention, le système de freinage comporte avantageusement un simulateur non couplé mécaniquement au piston du servomoteur d'assistance au freinage principalement en fonctionnement normal (c'est-à-dire en l'absence de défaillance). Ce simulateur est destiné à recevoir au moins une commande de freinage de la pédale de frein et permet d'établir ou de contrôler, en échange, une différence de pressions entre la chambre avant et la chambre arrière du servomoteur d'assistance au freinage de façon à commander le déplacement du piston du servomoteur. Avantageusement, le simulateur est un simulateur pneumatique.

Selon une forme de réalisation préférée de l'invention, ledit servomoteur d'assistance au freinage ne comporte pas de piston équipé d'une vanne trois voies solidaire du piston du servomoteur.

Ainsi, selon l'invention, la valve trois voies est fixe, c'est-à-dire n'est pas entraînée mécaniquement par l'équipage mobile comportant la Lige de commande, le piston pneumatique et la tige de poussée.

Le dispositif selon l'invention comporte des moyens de support solidaire directement ou indirectement de la partie stationnaire du servomoteur pneumatique d'assistance au freinage.

Un piston hydraulique d'une vanne de commande trois voies est soumis à deux actions contraires, d'une part la commande de freinage provenant d'un simulateur hydraulique, et d'autre part, une force de réaction exercée par un élément élastique de préférence contraint entre ledit piston hydraulique et un palpeur d'admission d'air ou de liquide dans un servomoteur pneumatique et/ou hydraulique d'assistance au freinage.

Dans ce cas, on prévoira de préférence que l'élasticité dudit élément élastique de simulation de freinage est réglée de façon à transmettre à la pédale de frein un effort simulant un effort de freinage.

Selon une forme de réalisation préférée de l'invention, ledit élément élastique de simulation de freinage est un ressort.

Par ailleurs, on pourra prévoir que ledit simulateur hydraulique comporte une vanne trois voies permettant de:

- mettre en communication la chambre arrière avec la chambre avant,
- ou d'isoler la chambre arrière de la chambre avant,
- ou de mettre en communication la chambre arrière avec une source de pression permettant d'établir une différence de pressions entre la chambre avant et la a chambre arrière.

Il sera également avantageusement prévue une liaison hydraulique entre, d'une part, l'intérieur du maître cylindre et/ou un point quelconque du circuit hydraulique du véhicule et, d'autre part, le simulateur hydraulique de façon à retransmettre, vers la pédale de frein des efforts correspondant à des variations de pressions dans le maître cylindre et/ou ledit circuit hydraulique.

En ce qui concerne la vanne trois voies, on prévoira qu'elle comporte un palpeur mobile sous l'action dudit piston de commande, un clapet mobile sous l'action du palpeur, et un siège de clapet fixe contre lequel le clapet peut prendre appuie.

Selon une variante de réalisation de l'invention, le système comporte un dispositif de commande hydraulique intermédiaire commandé par la pédale de frein et retransmettant des forces de freinage par génération de pressions dans un circuit hydraulique pour commander le déplacement du piston de commande du simulateur hydraulique.

On peut également prévoir que la pédale de frein agisse directement sur le piston de commande pour commander son déplacement.

Selon une autre variante de réalisation du système de l'invention, le dispositif de commande hydraulique intermédiaire est fixé ou est intégré au servomoteur d'assistance au freinage. En outre, il comporte une tige de commande disposée selon l'axe du servomoteur d'assistance au freinage. Cette tige de commande est commandée par la pédale de frein et est capable, notamment en cas de défaillance et/ou de commande rapide de la pédale de frein, d'appuyer directement ou indirectement sur le piston du servomoteur d'assistance au freinage.

Selon une autre variante de réalisation du système de l'invention, ledit simulateur hydraulique est fixé ou est intégré au servomoteur de façon qu'un accès de la vanne trois voies communique avec la chambre avant et un autre accès communique avec la chambre arrière.

On pourra alors prévoir avantageusement que ledit simulateur hydraulique est disposé selon l'axe du servo-

4

moteur d'assistance au freinage.

Il est également possible de prévoir que ledit piston de commande soit couplé mécaniquement à la pédale de frein.

Avantageusement, le simulateur hydraulique peut se déplacer axialement sous la commande de la pédale de frein et commander le déplacement du piston du servomoteur.

Selon une autre variante de réalisation, le simulateur hydraulique possède un axe de déplacement du palpeur. Ledit axe est capable d'appuyer axialement sur le piston du servomoteur ou sur une tige d'appui pour commander le déplacement d'un piston du maître cylindre.

On prévoira également avantageusement que ledit piston de commande se déplace dans une enceinte remplie d'un fluide.

On pourra alors prévoir que ledit piston de commande se déplace dans une enceinte alimentée en liquide de freinage par l'intermédiaire d'une vanne à partir d'un réservoir de liquide frein du véhicule.

Ladite enceinte peut également comporter ledit élément élastique.

## BREVE DESCRIPTION DES FIGURES

Les différents objets et caractéristiques de l'invention apparaîtront plus clairement dans la description qui va suivre et faite à titre d'exemple en liaison avec les figures annexées qui représentent:

- les figures 1 et 2, des courbes de fonctionnement déjà décrites précédemment,
- la figure 3, un exemple de réalisation général du système de commande de circuit de freinage selon l'invention,
- la figure 4a, un exemple de réalisation du système de commande de circuit de freinage selon l'invention,
- les figures 4b à 4c, différents états de fonctionnement du simulateur hydraulique de la figure 4a,
- la figure 5a, un exemple de réalisation d'un simulateur hydraulique selon l'invention,
- la figure 5b, un système de commande de circuit de freinage incorporant le simulateur hydraulique de la figure 5a,
- la figure 6, une variante de réalisation du système de commande de circuit de freinage de la figure 4a,
- la figure 7a, une variante de réalisation du système de commande de freinage selon l'invention,
- les figures 7b et 7c, des états de fonctionnement du système de la figure 7a,
- les figures 8a et 8b, des variantes de réalisation du système de la figure 7a.

## DESCRIPTION DETAILLEE

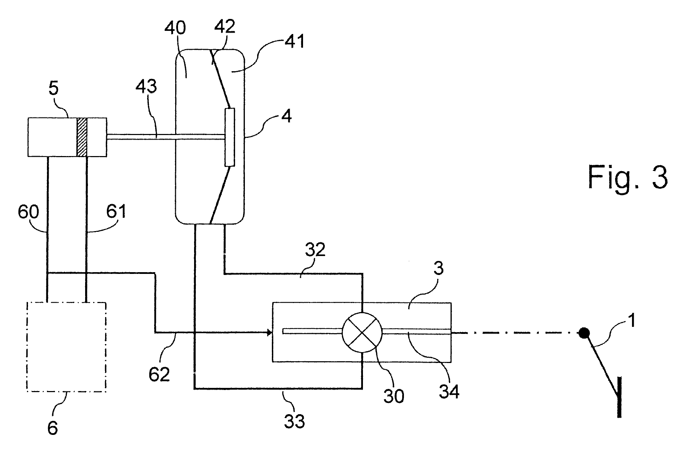

En se reportant à la figure 3, on va tout d'abord décrire un exemple de réalisation général d'un système de freinage selon l'invention.

Ce système comporte de manière connue un servomoteur d'assistance au freinage 4 comportant une chambre de travail 41 et une chambre à vide 40 séparées par une membrane ou piston de servofrein 42 pouvant se déplacer selon l'axe du servomoteur 4. Le déplacement du piston 42 commande par l'intermédiaire d'une tige de poussée 43 le déplacement des pistons d'un maître cylindre de freinage 5. Celui-ci induit des pressions dans le circuit de freinage 6 du véhicule.

Selon l'invention, il est prévu un dispositif hydraulique intermédiaire que nous appellerons simulateur hydraulique 3 dans la suite de la description. Un dispositif de commande de freinage ou pédale de frein 1 qui est actionnée par le conducteur du véhicule permet de commander le simulateur hydraulique 3. Celui-ci comporte notamment une vanne trois voies 30 qui est reliée à la chambre de travail 41 par une canalisation 32 et à la chambre à vide par la canalisation 33. Cette vanne permet:

- soit de mettre en communication la chambre de travail 41 avec la chambre à vide 40 en faisant communiquer les canalisations 32 et 33. Dans ce cas, les pressions sont sensiblement équilibrées des deux côtés du piston 42 et celui-ci reste immobile,
- ou d'isoler la chambre de travail 41 de la chambre à vide 40 (il s'agit d'une phase de début de freinage)
- soit de mettre en communication la chambre de travail 41 avec l'air atmosphérique en isolant la canalisation 32 de la canalisation 33 et en la reliant à l'air atmosphérique. Une différence de pressions est créée entre la chambre à vide 40 et la chambre de travail 41. Le piston 42 est sollicité pour se déplacer vers la chambre à vide (vers la gauche sur la figure 3). Le déplacement du piston 42 a pour effet de pousser la tige de poussée 43 vers le maître cylindre de freins 5. Le servomoteur fournit alors un effort de freinage au maître cylindre de freins.

Dans un tel système, la pédale de frein est ainsi découplée mécaniquement du servomoteur d'assistance au freinage 4, du maître cylindre de frein 5 et du circuit hydraulique de freinage 6 du véhicule.

Par contre, on peut prévoir de relier le simulateur hydraulique 3 au circuit hydraulique du véhicule et notamment à une chambre du maître cylindre par une canalisation 62. Dans ces conditions, des transferts de liquide frein vers le maître cylindre sans modification de la pédale de frein et des variations de pressions dans le circuit hydraulique du véhicule seront signalées au moins en partie au simulateur hydraulique 3, lequel retransmettra ces variations à la pédale de frein par la tige 34. Ces transferts de liquide de frein peuvent être induits, par exemple, par un dispositif d'anti-blocage de roues (ABS) ou par un système de contrôle dynamique de trajectoire (ESP).

Ces variations sont donc filtrées vers la pédale de frein, ce qui permet d'améliorer le confort du conducteur tout en permettant au conducteur de mieux suivre l'état du système de freinage.

Par ailleurs, le simulateur hydraulique 3 peut comporter un élément élastique (non représenté sur la figure 3) entre la pédale de frein et la commande de la vanne trois voies et offrant un effort de résistance à la commande de déplacement de la pédale de frein ce qui a pour effet de simuler, à l'intention du conducteur, les efforts de freinage exercés.

Le système de l'invention comporte donc une vanne trois voies permettant de commander le servomoteur d'assistance au freinage 4 mais cette vanne trois voies ne se déplace pas en fonctionnement de freinage normal contrairement aux vannes trois voies des servofreins couramment utilisés dans la technique.

Par ailleurs, le piston primaire du maître cylindre 5 n'est pas lié à la vanne trois voies.

Enfin, un élément élastique situé entre la pédale de frein et la commande de la vanne trois voies assure une fonction de découplage pour éviter des retours directs de réactions des circuits de freinage vers la pédale de frein et pour fournir une loi de restitution des efforts de freinage vers la pédale de frein.

En raison de l'indépendance de la position du maître cylindre par rapport à la position de la pédale de frein et en raison de la présence d'un ressort de simulation, le système de l'invention permet:

- d'établir une loi effort de freinage par rapport à la position de la pédale de frein. La relation entre la course de la pédale de frein, l'effort et la pression dans le circuit de freinage pourra être toujours constante en fonctionnement normal.
- de filtrer les perturbations provenant du circuit hydraulique (par exemple, les pulsations hydrauliques vibratoires qui se produise lors d'une régulation du système ABS),
- d'avoir une insensibilité aux grands déplacements de liquide de freinage, par exemple, dans les freins de grandes dimensions (freins de gros diamètres et/ou de courses importantes) et aux variabilités de l'absorption,
- d'être insensible (ou de diminuer la sensibilité) aux transferts de volumes de liquides de frein, provoqués par un groupe hydraulique, dans un sens ou dans un autre, entre les freins du véhicule et le maître cylindre.

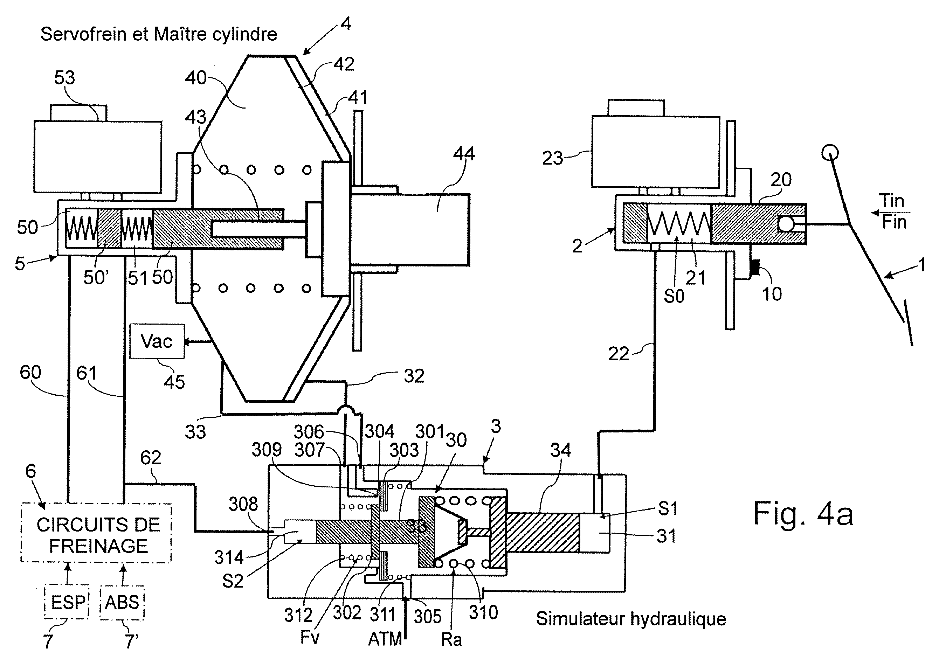

En se reportant à la figure 4a, on va maintenant décrire un exemple de réalisation d'un système de freinage plus détaillé conforme à l'invention. Les éléments de la figure 4a porte les mêmes références que les éléments de la figure 3 qui assurent les mêmes fonctions. Il en sera de même dans les autres figures annexées à cette description.

Ce système comporte:

- une pédale de frein 1 commandable par le conducteur du véhicule et permettant d'actionner un dispositif de commande hydraulique 2,
- le dispositif de commande hydraulique 2 comportant un piston 20 commandé par la pédale de frein et capable de mettre sous pression une chambre 21 pour injecteur un fluide sous pression dans une canalisation 22,
- un simulateur hydraulique 3 correspondant au simulateur hydraulique 3 de la figure 3. Ce simulateur hydraulique reçoit la pression injectée dans la canalisation 22 et permet selon sa position de commander le fonctionnement du servomoteur d'assistance au freinage 4. La constitution et le fonctionnement de ce simulateur hydraulique seront décrits plus en détail ci-après,
- le servomoteur d'assistance au freinage ou servofrein 4 comportant une chambre à vide 40 (chambre avant dans la plupart des servomoteurs) et une chambre de travail 41 (chambre arrière) séparées l'une de l'autre par un piston 42 mobile axialement. Une source de dépression 45 permet de faire le vide dans la chambre à vide 40. Un déplacement du piston 42 (vers la gauche sur la figure 4a) entraîne un déplacement d'une tige de poussée 43.
- un maître cylindre de frein 5 comportant des pistons 50 et 50' dont les déplacements sont commandés par la tige de poussée 43,
- des circuits hydrauliques de freinage 6 permettant de retransmettre de la pression de freinage aux dispositifs de freins des roues du véhicule.

Le simulateur hydraulique 3 comporte une chambre d'entrée 31 à laquelle est reliée la canalisation 22 venant du dispositif de commande hydraulique 2. La chambre d'entrée 31 contient un piston 34 permettant de commander la vanne trois voies 30.

La vanne trois voies 30 comporte un axe de palpeur 301 mobile axialement qui porte un palpeur 302 (ou piston plongeur). Ce palpeur comporte un siège appelé siège d'admission qui peut être en contact, selon sa position, avec un clapet 303. Le clapet 303 peut être en contact, selon sa position, avec un siège de clapet 309. Un ressort 312 permet, en position de repos, de repousser le palpeur vers la droite (sur la figure) et un ressort 311 permet de repousser le clapet 303 vers la gauche.

La vanne trois voies 30 est connectée:

- par un accès 305, à la pression atmosphérique,
- par un accès 306 et une canalisation 33, à la chambre à vide 40 du servofrein,
- par un accès 307 et une canalisation 32, à la chambre de travail 41 du servofrein.

Par ailleurs, le simulateur hydraulique 3 possède un ressort de simulation 310 situé entre le piston 34 et l'axe mobile de palpeur 301. Ce ressort a pour but de simuler pour le conducteur un effort de freinage et de déterminer une course de déplacement pour la pédale de frein. La compression du ressort 310 permet ainsi un déplacement (avancement) de la pédale de frein, simulant ainsi le comportement d'un système de frein classique.

En outre, le simulateur hydraulique 3 possède un accès 308, connecté par une canalisation 62, aux circuits de freinage et permettant à la pression régnant dans les circuits de freinage d'agir sur l'axe de palpeur 301.

Le servofrein 4 est tel que décrit en relation avec la figure 3. Il possède une axe de guidage de déplacement 44 du piston 42 et de la tige de poussée 43. De plus, une source de dépression 45 permet de faire le vide ou de réduire la pression dans la chambre à vide 40.

Le maître cylindre de freins 5 est, par exemple un maître cylindre tandem et est alimenté en fluide de freinage par un réservoir 53.

Les circuits de freinage 6, symbolisés en trait mixte sur la figure 4a, sont connectés au maître cylindre par des canalisations 60 et 61. La canalisation 62 relie la canalisation 61 au simulateur 3.

Des systèmes permettent d'agir sur les circuits de freinage et leur sont connectés. Il s'agit, par exemple, d'un système de contrôle dynamique de trajectoire 7 (ESP) et d'un système d'antiblocage des roues 7' (ABS).

On va maintenant décrire le fonctionnement du système de la figure 4a en se reportant aux figures 4a à 4d qui représentent différents états du simulateur hydraulique 3 à différentes étapes de fonctionnement.

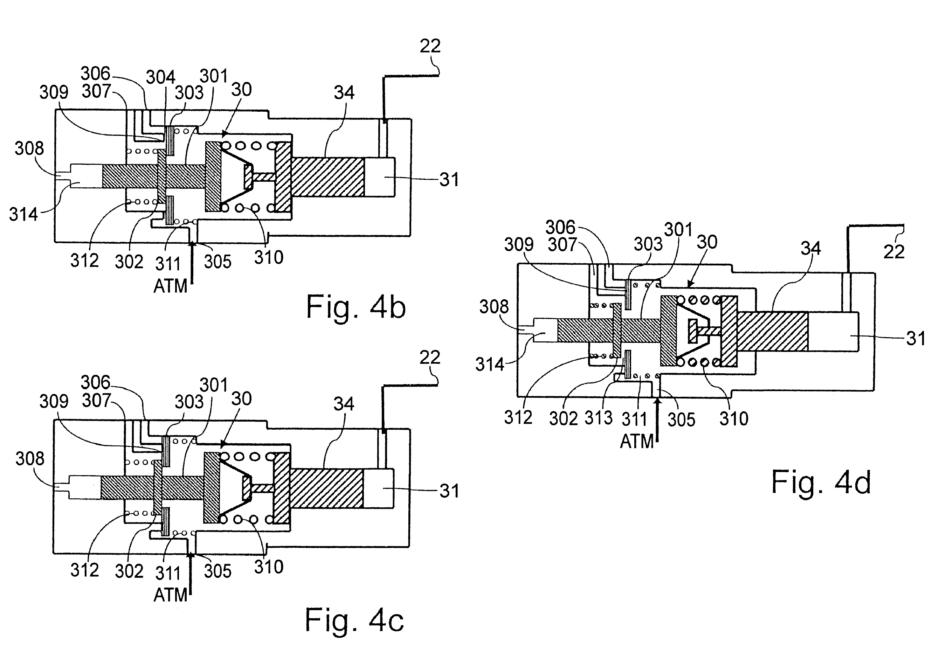

Lorsque le conducteur n'appuie pas sur la pédale de frein 1, le système de freinage est au repos. Le simulateur hydraulique est dans l'état représenté en figure 4b. La vanne trois voies 30 met en relation la chambre à vide 40 avec la chambre de travail 41 par les canalisations 32, 33, par les accès 306, 307 et par un passage qui est symbolisé par un accès interne 304. Les deux chambres 40 et 41 étant à la même pression, aucun effort de freinage n'est transmis par le servofrein 4 vers le maître cylindre de freins 5.

Lorsque le conducteur appuie sur la pédale de frein 1, le piston 20 du dispositif de commande hydraulique 2 comprime le fluide (ou le gaz) contenu dans la chambre 21. Une pression est envoyé par la canalisation 22 dans la chambre d'entrée 31 du simulateur hydraulique 3. Cette pression commande le déplacement du piston 34 qui pousse sur l'axe de palpeur 301 par l'intermédiaire du ressort 310. Le palpeur 302 se déplace vers la gauche (figure 4c). Le clapet 303, poussé par le ressort 311, se déplace également vers la gauche et ferme l'accès 304. La communication entre les accès 306 et 307 est fermée. La chambre à vide 40 se trouve isolée de la chambre de travail 41.

Lorsque la pression dans la chambre d'entrée augmente, le piston 34 se déplace encore vers la gauche. L'axe de palpeur 301 et le palpeur 302 se déplacent également vers la gauche. Comme on peut le voir sur la figure 4d, le palpeur 302 s'écarte du clapet 303 et ouvre un accès de communication 313 entre les accès 307 et 305. La chambre de travail 41 est donc mise en communication avec la pression atmosphérique par l'intermédiaire de la vanne trois voie du simulateur hydraulique.

La pression dans la chambre de travail 41 devient supérieure à la pression dans la chambre à vide 40. De ce fait le piston 42 et la tige de poussée 43 sont entraînées vers la gauche (voir figure 4a). La tige de poussée 43 pousse sur le piston primaire 50 assurant une montée en pression entraînant le déplacement du piston secondaire 50'. Le maître cylindre 5 induit une pression de freinage dans les canalisations 60 et 61 et dans les circuits de freinage 6.

L'actionnement de la pédale de frein 1 a donc permis la transmission d'un ordre de freinage au servofrein 4 par l'intermédiaire du simulateur hydraulique 3. En réponse le servofrein 4 a commandé l'induction d'une pression de freinage dans les circuits de freinage du véhicule.

On notera que dans le simulateur hydraulique, la transmission de l'ordre de freinage venant de la pédale de frein a été retransmis par l'intermédiaire du ressort 310. Le réglage de l'élasticité de ce ressort (de sa résistance élastique) permet de simuler un effort de freinage vers la pédale de frein. Il est donc possible de simuler, à l'intention du conducteur, une réaction à un effort de freinage similaire à une réaction d'un système de freins classique.

Par ailleurs, certains véhicules sont équipés de systèmes capables d'agir sur les circuits de freinage du véhicule. Il s'agit, par exemple, du système d'antiblocage des roues 7' (ABS) et du système de contrôle dynamique de trajectoire 7 (ESP). Il peut être utile de donner au conducteur la perception du fonctionnement de ces systèmes pour que le conducteur puisse être averti que le véhicule peut se trouver dans des conditions limites de stabilité sur la route.

Le système de l'invention prévoit une canalisation 62 qui relie une canalisation (61 par exemple) des circuits de freinage à un accès 308 du simulateur de freinage assurant non seulement l'équilibrage de la vanne trois voies mais permet aussi, si cela est désiré, d'exercer une réaction ressentie sur la pédale de frein. Cet accès communique avec une chambre de simulation 314 dans laquelle coulisse une extrémité de l'axe de palpeur 301. La pression du fluide de freinage est ainsi appliquée à cette extrémité de l'axe de palpeur 301. Celui-ci reçoit donc les variations de pression induites dans les circuits de freinage et retransmet ces variations vers la pédale de frein.

Dans un tel système, le palpeur cherche donc son équilibre entre la montée en pression P1 dans la chambre d'entrée 31 du simulateur hydraulique et la montée en pression P2 dans la chambre de simulation 314.

De façon générale, dans un système de freinage assisté, le taux d'assistance est donné par le rapport

$$1/S = P/F$$

où:

- F représente la force appliquée à la tige de commande,
- P représente la pression de freinage fournie par le maître cylindre de freins.

Dans le système de la figure 4a, la force de freinage Fin appliquée par la pédale de frein appliquée à la tige de commande du piston 20 est retransmise par la chambre 21 du dispositif de commande hydraulique et la chambre d'entrée 31 du simulateur hydraulique 3.

Si on désigne par:

- S0, la section de la chambre 21,
- S1, la section de la chambre d'entrée 31,
- S2, la section de la chambre de simulation 314,

le taux d'assistance théorique est alors représenté par le rapport:

$$S1/S0.S2$$

La force d'entrée Fin appliquée à la tige de commande du piston 20, si on ne tient pas compte des frottements, est donnée par la formule (se reporter à la figure 4a):

$$Fin = Ra . Tin . S0^2/S1^2$$

dans laquelle:

- Ra est la raideur du ressort 310 (exprimée en N/m),
- Tin est la course de la tige de commande du piston 20,
- S0 est la section droite de la chambre 21,
- S1 est la section droite de la chambre 31,

En se reportant toujours à la figure 4a, et ne tenant pas compte des frottements, la pression Pmc dans le maître cylindre de frein est fonction de la force sur la pédale de frein. Cette pression s'exprime par la relation suivante:

$$Pmc = [(Ra . Tin . S0/S1) - Fv] / S2$$

dans laquelle:

- Pmc: pression dans le maître cylindre 5,
- Ra: raideur du ressort de simulation 310,
- Tin: course de déplacement de la tige de commande du piston 20 (et donc du piston 20 lui-même), S0: section droite de la chambre 21,

- S1: section droite de la chambre 31,
- S2: section droite de la chambre 314,
- Fv: charge en place du ressort 312 de palpeur lorsque celui est en état d'équilibre.

On voit donc que dans le système de l'invention, un élément élastique situé entre la pédale de frein et la commande de la vanne trois voies assure une fonction de découplage pour éviter des retours directs de réactions des circuits de freinage vers la pédale de frein et pour fournir une loi de restitution des efforts de freinage vers la pédale de frein. A tout moment, la vanne trois voies est commandée par un équilibre des forces:

- force de pilotage qui est fonction de la force exercée sur la pédale de frein,
- et pression dans le maître cylindre (ou dans le circuit hydraulique de freinage).

On a donc toute liberté pour choisir le maître cylindre le mieux adapté (par exemple, grand volume et/ou grande course). Un tel système permettra de suppléer à un disfonctionnement tel que, par exemple, la présence d'air dans le circuit hydraulique de freinage, la course de la pédale de frein étant alors allongé pour atteindre l'équilibre.

De plus, comme cela a été mentionné précédemment, la vanne trois voies 3 permet de commander le servomoteur d'assistance au freinage 4 mais ne se déplace pas en fonctionnement de freinage normal contrairement aux servomoteurs connus dans la technique.

Par ailleurs, le piston primaire du maître cylindre 5 n'est pas lié à la vanne trois voies.

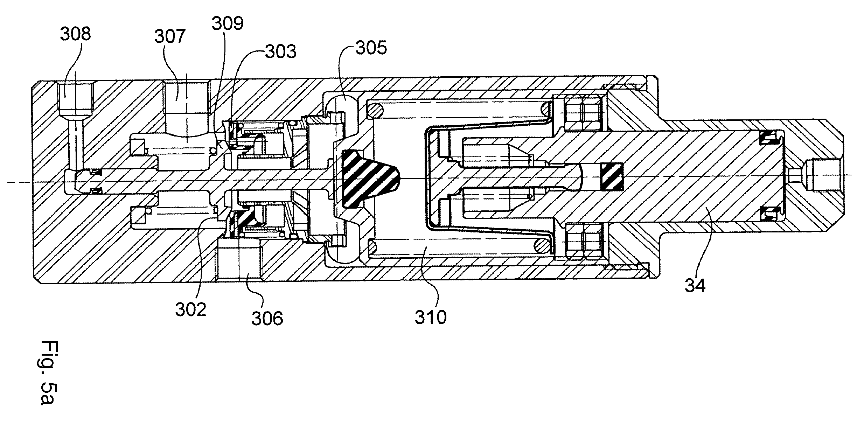

La figure 5a représente un exemple de réalisation d'un simulateur hydraulique 3 selon l'invention. On retrouve sur cette figure:

- le piston d'entrée 34,
- le ressort de simulation 310,
- le palpeur 302,
- le clapet 303,
- le siège de clapet 309,
- les accès 306 et 307 vers respectivement la chambre à vide et la chambre de travail, l'accès 305 de mise à la pression atmosphérique,
- l'accès 308 permettant un retour de la pression de freinage vers le simulateur hydraulique.

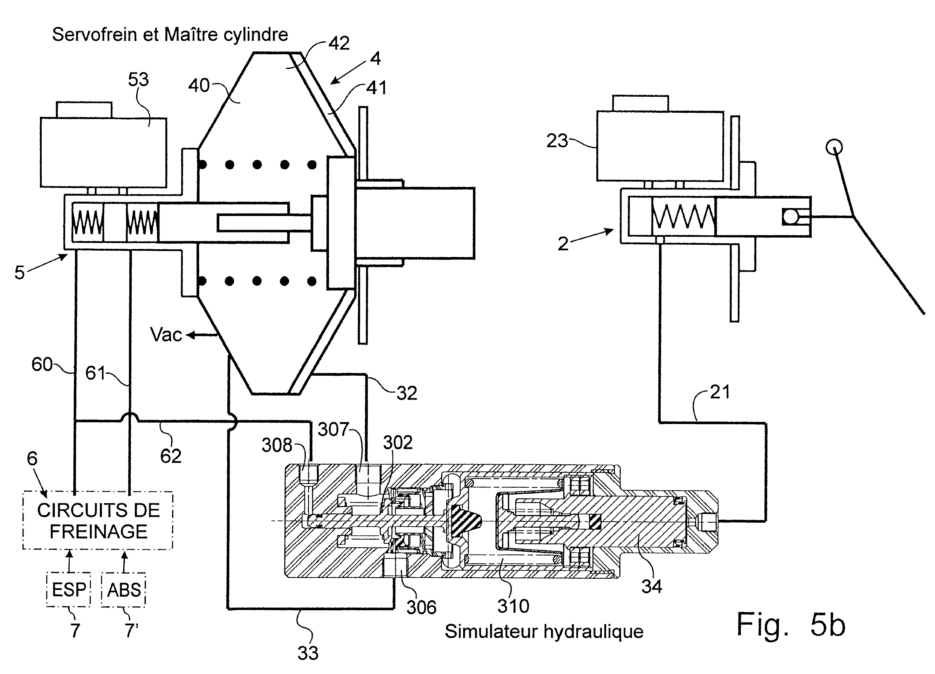

Le montage du simulateur de la figure 5a se fait comme cela est représenté sur la figure 5b en connectant les canalisations 21, 32, 33 et 62 en accord avec la figure 4a.

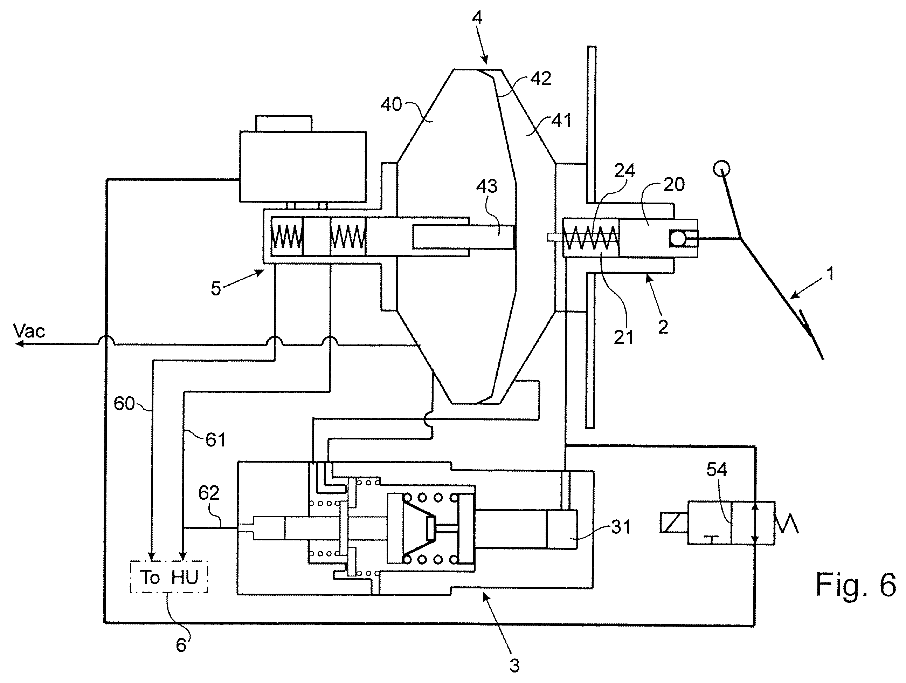

La figure 6 représente une forme de réalisation du système de la figure 4a dans laquelle le dispositif de commande hydraulique 2 est intégré au servofrein 4.

Le simulateur hydraulique 3 est réalisé de façon similaire à ce qui a été décrit précédemment. On y retrouve les mêmes éléments qui ne seront donc pas décrits à nouveau.

Le dispositif de commande hydraulique 2 est placé selon l'axe du servofrein 4. Il possède une tige de commande 24 qui pénètre à l'intérieur de la chambre de travail 41. Une extrémité de cette tige de commande se trouve à faible distance du piston 42 et de la tige de poussée 43. Cette disposition permet en cas de défaillance du simulateur hydraulique et/ou du servofrein, d'exercer une pression directement ou quasi directement (par l'intermédiaire du piston 20 et de la tige de commande 24) sur la tige de poussée 43.

La chambre 21 du piston 20 du dispositif de commande 2 et la chambre d'entrée 31 du simulateur hydraulique peuvent être remplies d'un fluide qui peut être le fluide de freinage du véhicule. Ces chambres sont alors alimentées en fluide de freinage par une vanne 54 connectée au réservoir de liquide frein. En l'absence de freinage, la vanne 54 est ouverte et le liquide de frein du réservoir alimente les chambres 21 et 31. Lors d'un freinage, la vanne 54 est fermée et les chambres 21 et 31 sont isolées du réservoir de liquide de frein.

En se reportant à la figure 7a, on va décrire une variante de réalisation du système de l'invention. Comme déjà mentionné précédemment, les éléments assurant les mêmes fonctions, sur cette figure 7a que dans les autres figures portent les mêmes références.

Dans cette variante de réalisation, le simulateur de freinage 3 est intégré dans le servofrein 4. De plus, le piston 34 de commande du palpeur 302 est commandé directement par la pédale de frein, mais il pourrait, sans sortir du cadre de l'invention être commandé par un dispositif de commande tel que 2 comme dans la figure 4a.

On retrouve dans le simulateur hydraulique 3, le ressort de simulation 310, l'axe de palpeur 301, le palpeur 302, le clapet 303, le siège de clapet 309, l'accès 305 de mise à la pression atmosphérique. Seuls les accès 306 et 307 vers le chambre à vide 40 et vers la chambre de travail 41 respectivement peuvent apparaître différents, mais le fonctionnement du simulateur hydraulique est le même que dans la figure 4a en fonctionnement normal.

Au repos, en l'absence de commande de freinage, le système est dans l'état représenté par la figure 7a. La chambre de travail 41 est mise en communication avec la chambre à vide 40 par l'accès 307 et l'accès 304.

Lorsque le conducteur appuie sur la pédale de frein, on a le fonctionnement suivant illustré par la figure 7b:

- le piston 34 se déplace vers la gauche,
- il transmet une force de déplacement vers la gauche, par l'intermédiaire du ressort 310, à l'axe de palpeur 301,
- le palpeur 302 se déplace vers la gauche,
- le clapet 303 se plaque contre le siège de clapet 309,
- le palpeur 302 se sépare du clapet 303 et ouvre un passage 313 permettant à la chambre de travail 41 de communiquer avec l'accès 305,
- la chambre de travail 41 est mise à la pression atmosphérique,
- le piston 42 se déplace vers la gauche,
- une force freinage est appliquée vers la gauche au piston 50 du maître cylindre 5. Dans l'exemple de réalisation avantageux illustré par la figure 7a une pièce monobloc joue le rôle simultanément de tige de poussée (tige de poussée 43 sur la figure 4a) et de piston 50.

Dans ce fonctionnement, on voit donc que le simulateur hydraulique 3 a permis la transmission d'une force de freinage du servofrein au maître cylindre sans qu'une tige de commande soit en contact mécanique (même indirectement) avec la tige de poussée qui actionne le piston du maître cylindre. La commande de la pédale de frein est donc découplée mécaniquement du servofrein et du maître cylindre.

La pédale de frein est donc au moins partiellement découplée des effets résultant du fonctionnement du servofrein et du circuit de freinage. Notamment, le siège de clapet 309 appartient à une pièce qui est immobile en fonctionnement normal de freinage. Cependant, l'axe de palpeur 301 coulisse dans un trou 319 du piston 50 du maître cylindre. L'extrémité 325 de l'axe 301 à la pression qui règne dans la chambre 51 du maître cylindre. Comme cela a été décrit précédemment, la vanne trois voies du simulateur est donc commandée par un équilibre des forces:

- force de pilotage qui est fonction de la force exercée sur la pédale de frein,
- et pression dans le maître cylindre.

Le système des figures 7a et 7b peut en outre posséder une vanne 55 qui est reliée au réservoir de liquide de frein 53 et qui permet d'alimenter en liquide de frein l'enceinte 315 dans laquelle coulisse le piston 34.

Au repos (absence de freinage, cette vanne 55 est fermée. En situation de freinage, elle est ouverte (sauf en cas de défaillance comme on le verra ci-après). Le liquide de freinage contenu dans l'enceinte 315 concourt, avec le ressort 310, à transmettre une sensation de freinage vers la pédale de frein.

En effet, l'invention prévoit de calibrer le diamètre du trou de communication 318 de la vanne 55 vers l'enceinte 315 de façon à limiter les débits de fluide de l'enceinte 315 vers la vanne 55. On modifie ainsi les retours de sensations vers la pédale de frein notamment lorsque le conducteur appuie rapidement sur la pédale de frein.

Cependant, on peut également prévoir que dans le cas, par exemple, où le conducteur appuie brutalement sur la pédale de frein, la vanne 55 se ferme ce qui permet de transmettre directement l'ordre de freinage directement (ou quasi directement) au palpeur 302 et ce qui va réduire la course de la pédale de frein.

Enfin comme cela sera décrit ci-après, un joint 317 permet d'isoler, en cas de défaillance, l'enceinte 315 de la vanne 55.

La figure 7c illustre le fonctionnement du système en cas de défaillance du servofrein et/ou du simulateur hydraulique.

En cas de défaillance, l'absence de freinage conduit le conducteur à exercer sur la pédale de frein un effort plus important que lors d'un freinage normal. Un épaulement 316 de l'axe de palpeur 301 est poussé à bout de course et se trouve en butée contre la pièce d'ensemble du simulateur hydraulique. Le simulateur hydraulique 3 est entraîné vers la gauche et appui sur le piston de maître cylindre 50 (ou sur la tige de poussée qui agit sur le piston du maître cylindre). Un freinage non assisté est ainsi assuré.

Comme on peut le voir sur la figure 7c, l'accès 318 qui permet normalement la communication entre l'enceinte 315 et la vanne 55 est fermé. Un joint 317 assure une isolation hermétique de cet accès 318 lors de l'avancement du piston 34, ce qui correspond à une défaillance de fonctionnement du servofrein. Ainsi dès que le piston 34 a dépassé l'accès 318 et l'a obturé, le liquide de frein présent dans l'enceinte 315 et comprimé par le piston 34, assure le déplacement vers la gauche de l'axe de clapet 301 et/ou du piston 50 ainsi que des pièces intermédiaires.

Alternativement, on peut prévoir, de manière similaire à la figure 6, que l'axe de palpeur 301 pousse par son extrémité de gauche le piston 50 du maître cylindre.

L'action du joint 317 peut être complétée ou remplacée par la fermeture de la vanne 55.

On notera que dans ce fonctionnement de défaillance la vanne 55 est avantageusement fermée pour assurer une transmission autant que possible intégrale de l'effort de freinage appliqué à la pédale de frein vers le piston du maître cylindre.

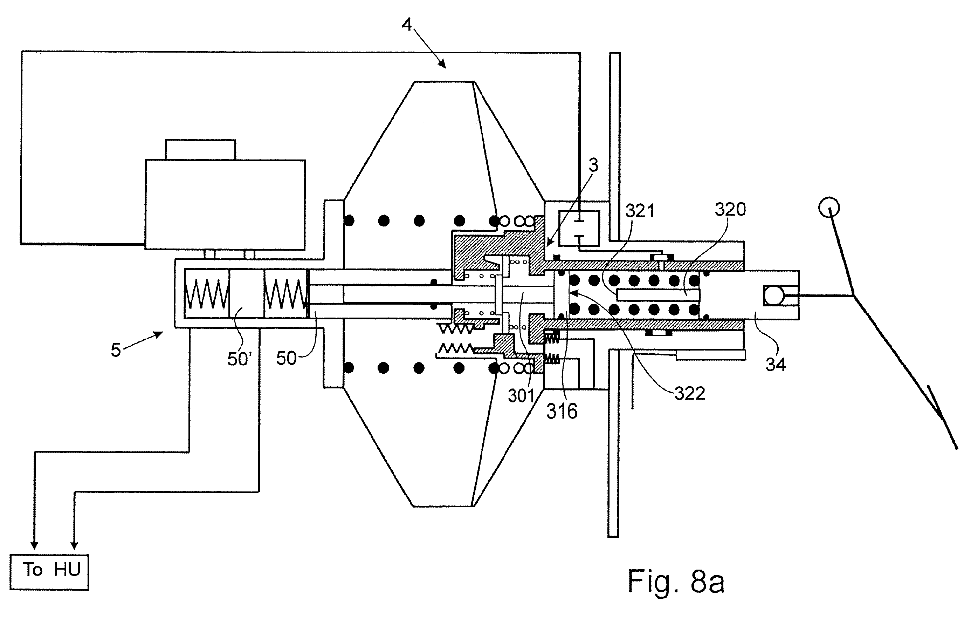

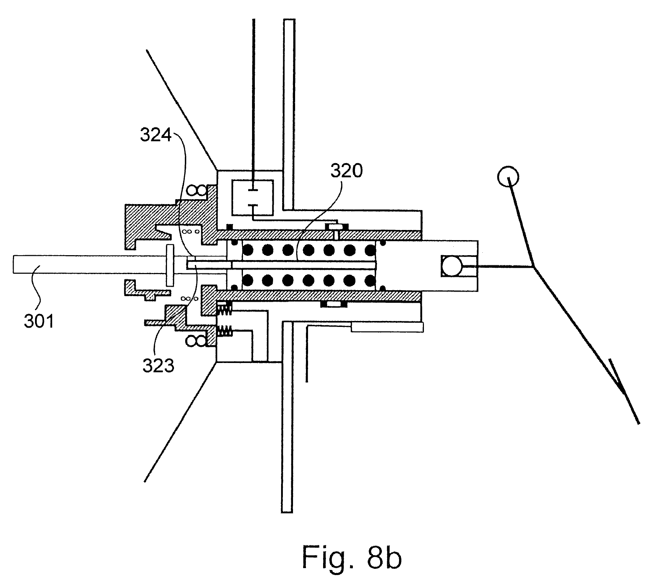

Les figures 8a et 8b représentent des variantes de réalisation du système de la figure 7a dans lesquelles le piston 34 comporte une tige axiale 320 située entre le piston 34 lui-même et l'axe de palpeur 301. La distance entre l'extrémité 321 de la tige 320 et la face 322 de la tige 301 correspond à un fonctionnement de freinage normal du simulateur et du servofrein 4.En cas de défaillance du simulateur ou du servofrein, le conducteur appuiera sur la pédale de frein pour que l'extrémité 321 de la tige 320 entre en contact avec la face 322. L'effort appliqué à la pédale de frein sera donc transmis directement à l'axe de palpeur 301. L'épaulement 316 de l'axe de palpeur est poussé à bout de course jusqu'à se trouver en butée contre la pièce d'ensemble du simulateur hydraulique. Le simulateur hydraulique 3 est entraînée vers la gauche et appui sur le piston de maître cylindre 50 (ou sur la tige de poussée qui agit sur le piston du maître cylindre). Un freinage non assisté est ainsi assuré par la tige 320.

La figure 8b représente une variante de réalisation du système de la figure 8a dans laquelle la tige 320 coulisse dans un trou axial 323 de l'axe de palpeur. Cette tige 320 est donc guidée dans le trou 323. Pour permettre un coulissement libre de la tige 320 et lui permettre d'entrer en contact avec le fond du trou 323 lors d'une défaillance, on peut prévoir un trou 324 qui fait communiquer le fond du trou 323 avec l'extérieur du trou 323. Alternativement, on peut également prévoir une cannelure longitudinale le long de la périphérie de la tige 320 pour permettre le passage de l'air situé dans le fond du trou 323.

Selon une variante de réalisation on peut supprimer la fonction du groupe hydraulique comportant le servofrein ou y suppléer en utilisant une pompe hydraulique.

Par exemple, on peut détecter la pression maximale de saturation dans le maître cylindre pour mettre en route une pompe hydraulique qui permettra d'injecter une pression supplémentaire dans le circuit de freinage. Une telle disposition permettra par exemple de réduire les dimensions du servofrein.

On peut, d'ailleurs, prévoir différents types de capteurs pour détecter la course de la pédale de frein ou du palpeur du simulateur, ainsi que des capteurs de pression et de vide.

Selon une autre variante de réalisation de l'invention, on peut donc prévoir avantageusement de détecter les mouvements de la pédale de frein en utilisant, par exemple, un capteur 10 de position de la pédale de frein. Alternativement, un tel capteur peut être prévu pour détecter les déplacements du piston 34.

L'information de position de la pédale de frein (ou du piston 34) peut correspondre à une dégradation de l'efficacité du système de freinage et peut être communiquée à l'utilisateur. On peut alors prévoir un retour de la sensation de freinage sur la pédale de frein à l'aide d'un système actif (électromagnétique par exemple). L'information de position de la pédale de frein (ou du piston 34) peut aussi être communiquée au système de contrôle dynamique de trajectoire (ESP) pour qu'il puisse agir en conséquence. En ce qui concerne le retour des sensations de freinage vers la pédale de frein, on peut prévoir une tige qui pénètre et coulisse dans le simulateur et qui reçoit les variations de pressions qui sont induites dans le circuit de freinage du véhicule. On prévoit alors de coupler mécaniquement (directement ou indirectement) cette tige à la pédale de frein de façon que celle-ci perçoive les déplacements de cette tige. Le taux de transmission des sensations de freinage peut être réglé en ajustant les frottements de déplacement de cette tige.

On peut également selon une autre variante de réalisation prévoir une boucle de vérification de freinage à l'aide de capteurs de mouvements des roues par exemple.

Selon une autre variante on peut également prévoir que la chambre avant (chambre à vide 40 sur les figures) soit mise à une pression supérieure à celle des servofreins classiques (à la pression atmosphérique par exemple) et que la chambre arrière (chambre de travail 41 sur les figures) soit mise en surpression.

En ce qui concerne la source de dépression, on peut prévoir qu'elle soit réalisée à partir de l'échappement du moteur du véhicule. Cependant, elle peut comporter une pompe électrique ou une pompe entraînée par le moteur du véhicule.

Dans les servofreins classiques, on a une source de dépression qui tend à faire le vide dans la chambre à vide (chambre avant) tandis que la chambre de travail (chambre arrière) est mise à la pression atmosphérique lors d'une action de freinage. Dans le système de l'invention, on peut également prévoir une source de suppression connectée à la chambre de travail pour améliorer le fonctionnement du servofrein.

Dans l'invention, cette disposition permet d'améliorer l'efficacité du servofrein ou de réduire son diamètre à efficacité équivalente.

Le système de l'invention permet un actionnement du ressort de simulation (310) à travers un circuit de commande hydraulique.

Il permet également un actionnement mécanique du ressort de simulation intégré à la commande. On peut donc avoir une isolation de la chambre du simulateur par un dispositif mécano hydraulique.

Il est possible d'adjoindre au système une bobine de commande électromagnétique ce qui permet de réduire la pression dans le maître cylindre, le système pouvant alors fonctionner au moins partiellement en mode actif avec un pilotage électrique.

Par ailleurs, il est possible de réaliser un fonctionnement double pente.

Le système de l'invention présente plusieurs avantages parmi lesquels on trouve les avantages suivants:

Le système de l'invention permet de découpler, au niveau de la pédale de frein, la force de freinage exercée, de la sensation de freinage perçue en retour par le conducteur. Il est donc possible de filtrer les perturbations provenant du circuit hydraulique (par exemple, les pulsations hydrauliques vibratoires qui se produise lors d'une régulation du système ABS), et d'avoir une insensibilité aux grands déplacements de liquide de freinage provoqués, par exemple, par un groupe hydraulique, dans un sens ou dans un autre, entre les freins du véhicule et le maître cylindre.

La force appliquée à la pédale de frein par le conducteur peut n'être que partiellement retransmise notamment dans le cas d'un actionnement rapide de la pédale de frein. Il est possible d'établir une loi "effort de freinage par rapport à la position de la pédale de frein".- Mais également, il est également possible, en cas d'actionnement rapide de la pédale de frein, de fournir une fonction d'aide au freinage d'urgence.

- Par ailleurs, selon l'invention, le fonctionnement du maître cylindre est découplé mécaniquement de la pédale de frein. Dans les variantes de réalisation où le simulateur hydraulique est intégré dans le servofrein, le siège de clapet 309 ne se déplace pas en fonctionnement normal. Ainsi, il est naturel de prélever dans le compartiment moteur, l'air assurant la poussée sur le piston 42 du servofrein, ce qui réduit le bruit dans l'habitacle. De plus, le ressort 310 de la vanne trois voies assure le filtrage des instabilités qui, dans un servofrein classique, provoquent des vibrations et des bruits indésirables. Dans l'habitacle du véhicule, on ne peut donc pas percevoir de bruit d'oscillation du palpeur que l'on peut percevoir habituellement avec la vanne trois voies des servofreins classiques.
- Le système de l'invention permet en outre d'ajuster les caractéristiques liées au fonctionnement de la pédale de frein (ajustement de la caractéristique course/pression) et cela indépendamment de l'absorption du système de freinage.
- Par ailleurs le système de l'invention est un système sans commande électrique et présente donc une bonne robustesse.
- De plus le fonctionnement du système de l'invention est quasi immédiat et ne présente pas de retard lié à un fonctionnement de circuits électroniques.

Le dispositif selon l'invention permet donc de dissocier la longueur de la course de la pédale de frein de la longueur de la course des pistons du maître cylindre. On peut ainsi optimiser, de manière indépendante:

- le fonctionnement en mode normal, c'est-à-dire par exemple avec assistance au freinage et avec une course de pédale de frein courte,
- et un fonctionnement en mode dégradé, c'est-à-dire par exemple sans assistance. Par exemple, on peut choisir un diamètre de piston du maître cylindre suffisamment petit pour que la force à exercer sur la pédale de frein soit acceptable et corresponde à une course longue uniquement en mode de défaillance.

Applications:

L'invention est applicable aux véhicules équipés:

- de moteurs à combustions interne,
- de moteurs électriques équipés de systèmes de freinage électriques à récupération d'énergie,
- à la fois de moteurs à combustion internes et de moteur électriques (véhicule hybrides).

Elle est applicable aussi bien aux véhicules légers qu'aux véhicules lourds. Le diamètre du piston du simulateur sera défini en fonction de la masse du véhicule à freiner. Il sera défini suffisamment petit pour pouvoir répondre aux exigences de freinages d'urgence.

**Revendications**

1. Système de commande de frein pour véhicule automobile comportant une pédale de frein (1), un servomoteur pneumatique d'assistance au freinage (4) lequel comprend une chambre avant (40) et une chambre arrière (41) séparées par un piston de servomoteur (42), ledit servomoteur (4) permettant de fournir une commande de freinage amplifiée fonction de la différence de pressions existant entre les deux dites chambres, un maître cylindre de frein (5) recevant les commandes de freinage amplifiées du servomoteur d'assistance au freinage (4), **caractérisé en ce qu'**il comporte un simulateur (3) non couplé mécaniquement au piston (42) du servomoteur d'assistance au freinage (4) ledit simulateur recevant au moins une commande de freinage de la pédale de frein (1) et permettant d'établir ou de contrôler, en échange, une différence de pressions entre la chambre avant (40) et la chambre arrière (41) du servomoteur d'assistance au freinage de façon à commander le déplacement du piston du servomoteur (42) et que le servomoteur d'assistance au freinage (4) ne comporte pas de piston équipé d'une vanne trois voies solidaire du piston du servomoteur(42).

2. Système de commande de frein selon la revendication 1, **caractérisé en ce que** ledit simulateur est un simulateur hydraulique.

3. Système de commande de frein selon la revendication ., **caractérisé en ce qu'**il comporte un piston hydraulique d'une vanne de commande trois voies lequel piston hydraulique est soumis à deux actions contraires, d'une part une commande de freinage provenant du simulateur hydraulique, et d'autre part, une force de réaction exercée par un élément élastique de simulation (310) de préférence contraint entre ledit piston hydraulique et un palpeur d'admission d'air ou de liquide dans un servomoteur pneumatique et/ou hydraulique d'assistance au freinage.

4. Système de commande de frein selon la revendication 3, **caractérisé en ce que** l'élasticité dudit élément élastique de simulation de freinage (310) est réglée de façon à transmettre à la pédale de frein un effort simulant un effort de freinage.

5. Système de commande de frein selon la revendication 4, **caractérisé en ce que** ledit élément élastique de simulation de freinage (310) est un ressort.

6. Système de commande de frein selon la revendication 2, **caractérisé en ce que** ledit simulateur hydraulique (3) comporte une vanne trois voies (30) permettant:

    - de mettre en communication la chambre arrière (41) avec la chambre avant (40),
    - ou d'isoler la chambre arrière (41) de la chambre avant (40),
    - ou de mettre en communication la chambre arrière (41) avec une source de pression permettant d'établir une différence de pressions entre la chambre avant et la chambre arrière.

7. Système de commande de frein selon la revendication 1, **caractérisé en ce qu'**il comporte une liaison hydraulique entre, d'une part, l'intérieur du maître cylindre et/ou un point quelconque du circuit hydraulique du véhicule et, d'autre part, le simulateur (3) de façon à retransmettre, vers la pédale de frein des efforts correspondant à des variations de pressions dans le maître cylindre et/ou ledit circuit hydraulique.

8. Système de commande de frein selon la revendication 6, **caractérisé en ce que** la vanne trois voies comporte un palpeur (302) mobile sous l'action dudit piston de commande (34), un clapet (303) mobile sous l'action du palpeur (302), et un siège de clapet fixe (309) contre laquelle le clapet (303) peut prendre appuie.

9. Système de commande de frein selon la revendication 8, **caractérisé en ce qu'**il comporte un dispositif de commande hydraulique intermédiaire (2) commandé par la pédale de frein (1) et retransmettant des forces de freinage par induction de pressions dans un circuit hydraulique (22, 31) pour commander le déplacement du piston de commande (34) du simulateur hydraulique (3).

10. Système de commande de frein selon la revendication 8, **caractérisé en ce que** la pédale de frein agit directement sur le piston de commande (34) pour commander son déplacement.

11. Système de commande de frein selon la revendication 9, **caractérisé en ce que** le dispositif de commande hydraulique intermédiaire (2) est fixé ou est intégré au servomoteur d'assistance au freinage (4) et **en ce qu'**il comporte une tige de commande (24) disposée selon l'axe du servomoteur d'assistance au freinage (4), ladite tige de commande(24) étant commandée par la pédale de frein et étant capable d'appuyer directement ou indirectement sur le piston (42) du servomoteur d'assistance au freinage.

**Patentansprüche**

1. Bremssteuervorrichtung für ein Kraftfahrzeug mit einem Bremspedal (1), einem pneumatischen Bremskraftverstärker (4), der eine vordere Kammer (40) und eine hintere Kammer (41) umfasst, die durch einen Bremskraftverstärkerkolben (42) voneinander getrennt sind, wobei der Bremskraftverstärker (4) erlaubt, in Abhängigkeit von der zwischen den beiden Kammern vorherrschenden Druckdifferenz einen verstärkten Bremsbefehl zu liefern, einem Hauptbremszylinder (5), der die verstärkten Bremsbefehle des Bremskraftverstärkers (4) empfängt, **dadurch gekennzeichnet, dass** sie einen Simulator (3) aufweist, der nicht mechanisch mit dem Kolben (42) des Bremskraftverstärkers (4) gekoppelt ist, wobei der Simulator mindestens einen Bremsbefehl von dem Bremspedal (1) empfängt und im Gegenzug erlaubt, eine Druckdifferenz zwischen der vorderen Kammer (40) und der hinteren Kammer (41) des Bremskraftverstärkers herzustellen oder zu steuern, um so die Bewegung des Bremskraftverstärkerkolbens (42) zu steuern, und dass der Bremskraftverstärker (4) keinen Kolben aufweist, der mit einem Dreiwegeventil ausgestattet ist, das einstückig mit dem Bremskraftverstärkerkolben (42) ausgebildet ist.

2. Bremssteuervorrichtung nach Anspruch 1, **dadurch gekennzeichnet, dass** der Simulator ein hydraulischer Simulator ist.

3. Bremssteuervorrichtung nach Anspruch ., **dadurch gekennzeichnet, dass** sie einen hydraulischen Kolben eines Dreiwegeregelventils aufweist, der zwei gegensätzlichen Abläufen unterworfen ist, einerseits einem von dem hydraulischen Simulator kommenden Bremsbefehl und andererseits einer Reaktionskraft, die von einem elastischen Simulationselement (310) ausgeübt wird, das vorzugsweise zwischen dem hydraulischen Kolben und einem Luft- oder Flüssigkeitseinlasssensor in einem pneumatischen und/oder hydraulischen Bremskraftverstärker eingeklemmt ist.

4. Bremssteuervorrichtung nach Anspruch 3, **dadurch gekennzeichnet, dass** die Elastizität des elastischen Bremssimulationselements (310) so geregelt ist, dass an das Bremspedal eine Kraft übertragen wird, welche die Bremskraft simuliert.

5. Bremssteuervorrichtung nach Anspruch 4, **dadurch gekennzeichnet, dass** das elastische Bremssimulationselement (310) eine Feder ist.

6. Bremssteuervorrichtung nach Anspruch 2, **dadurch gekennzeichnet, dass** der hydraulische Simulator (3) ein Dreiwegeventil (30) aufweist, das Folgendes erlaubt:

   - die hintere Kammer (41) mit der vorderen Kammer (40) zu verbinden,
   - oder die hintere Kammer (41) von der vorderen Kammer (40) zu trennen,
   - oder die hintere Kammer (41) mit einer Druckquelle zu verbinden, die es erlaubt, eine Druckdifferenz zwischen der vorderen Kammer und der hinteren Kammer herzustellen.

7. Bremssteuervorrichtung nach Anspruch 1, **dadurch gekennzeichnet, dass** sie eine hydraulische Verbindung zwischen einerseits dem Inneren des Hauptzylinders und/oder einem beliebigen Punkt des Hydraulikkreises des Fahrzeugs und andererseits dem Simulator (3) aufweist, um so an das Bremspedal Kräfte weiterzuleiten, die Druckschwankungen in dem Hauptzylinder und/oder dem Hydraulikkreis entsprechen.

8. Bremssteuervorrichtung nach Anspruch 6, **dadurch gekennzeichnet, dass** das Dreiwegeventil einen Sensor (302), der unter der Wirkung des Steuerkolbens (34) beweglich ist, eine Ventilklappe (303), die unter der Wirkung des Sensors (302) beweglich ist, und einen festen Ventilsitz (309), an dem die Ventilklappe (303) anliegen kann, aufweist.

9. Bremssteuervorrichtung nach Anspruch 8, **dadurch gekennzeichnet, dass** sie eine zwischengeschaltete hydraulische Steuervorrichtung (2) aufweist, die durch das Bremspedal (1) gesteuert wird und Bremskräfte durch das Verursachen von Drücken in einem Hydraulikkreis (22, 31) weiterleitet, um die Bewegung des Steuerkolbens (34) des hydraulischen Simulators (3) zu steuern.

10. Bremssteuervorrichtung nach Anspruch 8, **dadurch gekennzeichnet, dass** das Bremspedal direkt auf den Steuerkolben (34) wirkt, um dessen Bewegung zu steuern.

11. Bremssteuervorrichtung nach Anspruch 9, **dadurch gekennzeichnet, dass** die zwischengeschaltete hydraulische Steuervorrichtung (2) an dem Bremskraftverstärker (4) befestigt oder in ihn eingebaut ist und dass sie eine Steuerstange (24) aufweist, die entlang der Achse des Bremskraftverstärkers (4) angeordnet ist, wobei die Steuerstange (24) durch das Bremspedal gesteuert wird und in der Lage ist, direkt oder indirekt auf den Kolben (42) des Bremskraftverstärkers zu drücken.

**Claims**

1.  Brake control system for a motor vehicle comprising a brake pedal (1), a pneumatic brake booster (4) which comprises a front chamber (40) and a rear chamber (41) which are separated by a booster piston (42), the said booster (4) supplying an amplified braking command dependent on the pressure difference between the two said chambers, a brake master cylinder (5) receiving the amplified braking commands from the brake booster (4), **characterized in that** it comprises a simulator (3) not mechanically coupled to the piston (42) of the brake booster (4) the said simulator receiving at least one braking command from the brake pedal (1) and in return establishing or controlling a pressure difference between the front chamber (40) and the rear chamber (41) of the brake booster so as to control the movement of the booster piston (42), and **in that** the brake booster (4) does not have a piston equipped with a three-way valve secured to the booster piston (42).

2.  Brake control system according to Claim 1, **characterized in that** the said simulator is a hydraulic simulator.

3.  Brake control system according to Claim ., **characterized in that** it comprises a hydraulic piston of a three-way control valve which hydraulic piston is subjected to two opposing actions, firstly a braking command from the hydraulic simulator and secondly a reaction force exerted by an elastic simulation element (310) preferably constrained between the said hydraulic piston and a sensor sensing the ingress of air or of liquid into a pneumatic and/or hydraulic brake booster.

4.  Brake control system according to Claim 3, **characterized in that** the elasticity of the said elastic braking simulating element (310) is set up so that a force simulating braking force can be transmitted to the brake pedal.

5.  Brake control system according to Claim 4, **characterized in that** the said elastic braking simulating element (310) is a spring.

6.  Brake control system according to Claim 2, **characterized in that** the said hydraulic simulator (3) comprises a three-way valve (30) capable of:

    - placing the rear chamber (41) in communication with the front chamber (40),
    - or of isolating the rear chamber (41) from the front chamber (40),
    - or placing the rear chamber (41) in communication with a pressure source that establishes a pressure difference between the front chamber and the rear chamber.

7.  Brake control system according to Claim 1, **characterized in that** it comprises a hydraulic connection between, firstly, the inside of the master cylinder and/or any point on the hydraulic circuit of the vehicle and, secondly, the simulator (3) so that forces corresponding to variations in pressure in the master cylinder and/or the said hydraulic circuit can be passed on to the brake pedal.

8.  Brake control system according to Claim 6, **characterized in that** the three-way valve comprises a sensor (302) able to move under the action of the said control piston (34), a valve shutter (303) able to move under the action of the sensor (302), and a fixed valve seat (309) against which the valve shutter (303) can bear.

9.  Brake control system according to Claim 8, **characterized in that** it comprises an intermediate hydraulic control device (2) controlled by the brake pedal (1) and passing on braking forces by inducing pressures in a hydraulic circuit (22, 31) so as to control the movement of the control piston (34) of the hydraulic simulator (3).

10. Brake control system according to Claim 8, **characterized in that** the brake pedal acts directly on the control piston (34) in order to control the movement thereof.

11. Brake control system according to Claim 9, **characterized in that** the intermediate hydraulic control device (2) is fixed or is incorporated into the brake booster (4), and **in that** it comprises a control rod (24) positioned along the axis of the brake booster (4), the said control rod (24) being controlled by the brake pedal and capable of pressing directly or indirectly on the brake booster piston (42).

Fig. 1

Fig. 2

EP 1 976 738 B1

Fig. 3

Servofrein et Maître cylindre

Fig. 4a

Simulateur hydraulique

CIRCUITS DE FREINAGE

ESP    ABS

Tin
Fin

Vac

ATM

Fv    Ra

EP 1 976 738 B1

Fig. 4d

Fig. 4b

Fig. 4c

Fig. 5a

Servofrein et Maître cylindre

CIRCUITS DE FREINAGE

ESP    ABS

Vac

Simulateur hydraulique

Fig. 5b

EP 1 976 738 B1

Fig. 6

EP 1 976 738 B1

Fig. 7a

EP 1 976 738 B1

Fig. 7b

Fig. 7c

EP 1 976 738 B1

Fig. 8a

EP 1 976 738 B1

Fig. 8b

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2004005095 A